# EUROPEAN PATENT SPECIFICATION

(11) **EP 3 018 590 B1**
(45) Date of publication and mention of the grant of the patent: **10.04.2019**
(21) Application number: 14820300.3
(22) Date of filing: 16.04.2014
(51) Int. Cl.: G06F 17/21, G06F 17/30, H04L 29/08, H04W 4/18

(54) **DOCUMENT PROCESSING METHOD AND SYSTEM IN WIRELESS COMMUNICATIONS DEVICE**
DOKUMENTVERARBEITUNGSVERFAHREN UND -SYSTEM IN DRAHTLOSKOMMUNIKATIONSVORRICHTUNG
PROCÉDÉ ET SYSTÈME DE TRAITEMENT DE DOCUMENT DANS UN DISPOSITIF DE COMMUNICATIONS SANS FIL

(30) Priority: 03.07.2013 CN 201310276663
(43) Date of publication of application: 11.05.2016
(73) Proprietor: Huizhou TCL Mobile Communication Co., Ltd., Huizhou, Guangdong 516006 (CN)
(72) Inventor: YANG, Zhibing, Hui Zhou Guangdong 516006 (CN)
(74) Representative: Brachmann, Roland W.
(86) International application number: PCT/CN2014/075527
(87) International publication number: WO 2015/000322

(56) References cited:
- CN-A- 1 627 288
- CN-A- 101 697 157
- CN-A- 101 697 612
- CN-A- 102 622 592
- CN-A- 103 399 842
- US-A1- 2011 072 341
- US-A1- 2011 119 574

## Description

The present application relates to wireless communication apparatuses, and in particular relates to a method and a system for document processing in a wireless communication apparatus.

As wireless communication apparatuses become increasingly common in people's lives and have enhanced processing capabilities right now, people will use wireless communication apparatuses to process more and more things. Many things that used to be processed on a PC can now be processed on a wireless communication apparatus, such as mail, going online, chatting and document processing. Along with the arrival of the 3G and 4G era, seamless connection is formed between a wireless communication apparatus and a PC via a wireless network, which further enables the wireless communication apparatus to handle all matters in work. However, there are many types of documents that need to be processed in daily work. On the other hand, the hardware resources and processing capability of a wireless communication apparatus are limited, e.g. low memory, insufficient CPU processing capability, insufficient storage space and the like. As a result, applications of various types need to be installed if it is desired that a wireless communication apparatus process all types of documents. However, some applications cannot be installed on a wireless communication apparatus. As a result, there are still documents of many types that cannot be directly viewed on a wireless communication apparatus right now, such as EXCEL documents, MPP documents, etc. When a wireless communication apparatus receives documents of these types, they cannot be viewed and it is impossible to perform further processing according to the information in the documents.

CN 101 697 612 A discloses a network server that converts documents to a format selected by the user.

US 2011/072341 A1 discloses a method for converting documents into image files.

Therefore, the prior art is still in need of improvement and development.

In light of the above drawbacks of the prior art, the present application intends to solve the deficiencies and drawbacks of the prior art by providing a method and a system for document processing in a wireless communication apparatus, which can process a document and convert it to a format that can be opened by the wireless communication apparatus such that the wireless communication apparatus can view documents of all types.

This problem is solved according to the features of the independent claims. Further embodiments result from the depending claims.

The invention is defined by a method according to claim 1 and a system according to claim 6. Further embodiments are set out in the dependent claims.

The present application employs the following technical solution to solve the technical problem:
A method for document processing in a wireless communication apparatus is provided, comprising the following steps:
A. Upon receiving a document of an unidentifiable type, a wireless communication apparatus sends the document to a network server via a wireless communication module;
B. Upon receiving the document sent by the wireless communication apparatus, the network server carries out a document type conversion processing and then sends the converted document to the wireless communication apparatus via a wireless network;
C. Upon receiving the document converted by the network server, the wireless communication apparatus opens the document by calling a corresponding application with a document processing module.

According to an embodiment, said step B further comprises the following step: Pre-assigning an identification number to the wireless communication apparatus for differentiating different wireless communication apparatuses, said network server identifying said wireless communication apparatus with said identification number and establishing a network link.

According to an embodiment, said network server carrying out a processing on the document sent by the wireless communication apparatus for document type conversion in Step B specifically comprises the following step:
Upon receiving the document data, the network server performs type identification on said document, reads the document type, and activates a corresponding application on the network server to open said document for document conversion.

According to an embodiment, said corresponding application on the network server opening said document for document conversion is to correspondingly covert the document to a document of an image format sequentially and save the same sequentially.

According to an embodiment, said wireless communication apparatus receiving the document converted by the network server in Step C specifically comprises the following step:
Establishing a corresponding independent folder for each document, and saving the received document of an image format as converted by the network server sequentially into said corresponding independent folder.

According to an embodiment,
said Step B further comprises: the network server end performs typesetting on the converted document according to the information of the original document;
said Step C further comprises: the wireless communication apparatus saves the received converted document according to certain rules and manages the same according to certain rules.

The present invention further provides a method for document processing in a wireless communication apparatus, comprising the following steps:
A0. A user opens a document through a wireless communication apparatus for identification processing by a document processing module to determine the type of said document, if it is a document that can be identified by the wireless communication apparatus, then setting said document as an identifiable document, and transferring the corresponding file type to the system and displaying with a document icon of the corresponding type; if it is a document that cannot be identified by the wireless communication apparatus, then setting said document as an unidentifiable document type;
A. Upon receiving a document of an unidentifiable type, the wireless communication apparatus sends the document to a network server via a wireless communication module;
B. Upon receiving the document sent by the wireless communication apparatus, the network server carries out a document type conversion processing and then sends the converted document to the wireless communication apparatus via a wireless network;
C. Upon receiving the document converted by the network server, the wireless communication apparatus opens the document by calling a corresponding application with a document processing module.

In the method for document processing in a wireless communication apparatus, said step B further comprises the following step:
Pre-assigning an identification number to the wireless communication apparatus for differentiating different wireless communication apparatuses, said network server identifying said wireless communication apparatus with said identification number and establishing a network link.

In the method for document processing in a wireless communication apparatus, said network server carrying out a processing on the document sent by the wireless communication apparatus for document type conversion in Step B specifically comprises the following step:
Upon receiving the document data, the network server performs type identification on said document, reads the document type, and activates a corresponding application on the network server to open said document for document conversion.

In the method for document processing in a wireless communication apparatus, said corresponding application on the network server opening said document for document conversion is to correspondingly covert the document to a document of an image format sequentially and save the same sequentially.

In the method for document processing in a wireless communication apparatus, said wireless communication apparatus receiving the document converted by the network server in Step C specifically comprises the following step:
Establishing a corresponding independent folder for each document, and saving the received document of an image format as converted by the network server sequentially into said corresponding independent folder.

In the method for document processing in a wireless communication apparatus, said Step B further comprises: the network server end performs typesetting on the converted document according to the information of the original document;
said Step C further comprises: the wireless communication apparatus saves the received converted document according to certain rules and manages the same according to certain rules.

The present invention further provides a system for document processing in a wireless communication apparatus, said system comprising a wireless communication apparatus and a network server; the wireless communication apparatus and the network server form a communication link via a wireless network;
said wireless communication apparatus comprises a document processing module and a wireless communication module; said document processing module is configured to process documents on the wireless communication apparatus, including determination of document types, opening or closing of a document;
said wireless communication module is configured to, over a wireless link, upload a document in the wireless communication apparatus to said network server or to receive a corresponding document from said network server and transmit the same to the document processing module for processing;
said network server is configured to receive a document uploaded by the wireless communication apparatus and carry out document conversion according to the document type, and then download the converted document to the wireless communication apparatus.

According to an embodiment, said document processing module determining the type of a document during document processing comprises performing identification processing on the document, if it is a document that can be identified by the wireless communication apparatus, then setting said document as an identifiable document, and transferring the corresponding file type to the system and displaying with a document icon of the corresponding type; if it is a document that cannot be identified by the wireless communication apparatus, then setting said document as an unidentifiable document type.

According to an embodiment, said network server receiving a document uploaded by the wireless communication apparatus and carrying out document conversion according to the document type is to correspondingly covert the document to a document of an image format sequentially and save the same sequentially.

According to an embodiment, said document processing module is further configured to, upon receiving the converted document transmitted by said network server, establish a corresponding independent folder for each document, and save the received document of an image format as converted by the network server sequentially into said corresponding independent folder.

According to an embodiment, said network server is further configured to perform typesetting on the converted document according to the information of the original document;
said document processing module is further configured to save the received converted document according to certain rules and manage the same according to certain rules.

Compared with the prior art, the present invention provides a processing method and system that facilitate a user to view documents of various types on a wireless communication apparatus, when performing document processing, the wireless communication apparatus identifies the type of the document, in the event of a document that cannot be opened and processed, it just needs to send the document to a network server, the network server converts the document to a document format that the wireless communication apparatus can open, and downloads the converted document to the wireless communication apparatus, then the wireless communication apparatus can open the document that it was previously unable to open. By making use of the powerful processing capability of a network server to carry out a conversion processing on a document unidentifiable by a wireless communication apparatus, the wireless communication apparatus end does not need to install a large quantity of document processing applications, which saves the storage space for the wireless communication apparatus. Simply with a regular hardware configuration, the wireless communication apparatus can view documents of any type, which enhances the wireless communication apparatus' document processing capability and facilitates use by users.

The aforementioned characteristics, features and advantages of the invention as well as the way they are achieved will be further illustrated in connection with the following examples and considerations as discussed in view of the figures.
- Fig.1: is a basic flow chart of the method for document processing in a wireless communication apparatus according to the present application;
- Fig.2: is a logic structural block diagram of the system for document processing in a wireless communication apparatus according to the present application.

To make the objects, technical solutions and advantages of the present application clearer and more specific, the present application will be further described in detail below with reference to the accompanying drawings and embodiments. It should be understood that the described specific embodiments are only used to describe the present application, rather than limit the present application.

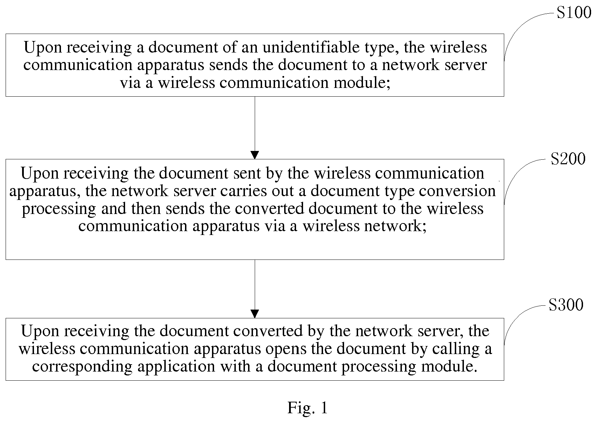

As shown in Fig.1, the basic flow chart of the method for document processing in a wireless communication apparatus according to the present application comprises the following implementation steps:
S100. Upon receiving a document of an unidentifiable type, the wireless communication apparatus sends the document to a network server via a wireless communication module; prior to receiving a document of an unidentifiable type by the wireless communication apparatus, a user opens a document through the wireless communication apparatus for identification processing by a document processing module to determine the type of said document, if it is a document that can be identified by the wireless communication apparatus, then setting said document as an identifiable document, and transferring the corresponding file type to the system and displaying with a document icon of the corresponding type; if it is a document that cannot be identified by the wireless communication apparatus, then setting said document as an unidentifiable document type.

S200. Upon receiving the document sent by the wireless communication apparatus, the network server carries out a document type conversion processing and then sends the converted document to the wireless communication apparatus via a wireless network; to enable automatic identification between the network server and the wireless communication apparatus, it is necessary to pre-assign an identification number to the wireless communication apparatus for differentiating different wireless communication apparatuses, said network server identifying said wireless communication apparatus with said identification number and establishing a network link.

Wherein, upon receiving the document data, the network server performs type identification on said document, reads the document type, and activates a corresponding application on the network server to open said document for document conversion.

Said corresponding application on the network server opening said document for document conversion is to correspondingly covert the document to a document of an image format sequentially and save the same sequentially.

S300. Upon receiving the document converted by the network server, the wireless communication apparatus opens the document by calling a corresponding application with a document processing module. To enable a wireless communication apparatus to correctly call the corresponding document, it is necessary to establish a corresponding independent folder for each document and save the received document of an image format as converted by the network server sequentially into said corresponding independent folder.

In terms of the document management by the wireless communication apparatus, to enable the converted document to match the original document, for example, when a PDF document or an EXCEL table is converted to a JPG document, it is necessary to typeset the converted document according to the information of the original document at the network server end, and at the same time, at the wireless communication apparatus end, to save the received converted document according to certain rules and manage the same according to certain rules, such that the user can conveniently operate on the converted document, e.g. viewing or management.

Specifically, before the network server converts each document, it first obtains the information corresponding to the current document via a corresponding application, including the name, document type, and document length (e.g. page number of the document) of the current document, and then, according to the sequence of the original document, converts every page of the document to a JPG image. When the conversion is completed, to make the converted document orderly and easy to manage, the network server names the JPG image of each page according to certain rules, such that the name of the JPG image file of each page comprises: name + type + page number, wherein each part has a fixed number of character digits, for example, the name has 20 digits, the type has 2 digits and the page number has 5 digits.

The "name" is a code of the original document name after conversion. With respect to the information, names of all converted files may contain names of the original documents corresponding thereto. Therefore, the document to which the converted document corresponds may be learned according to the information. Upon receiving the converted JPG document, the wireless communication apparatus may learn the name of the corresponding original document according to the name therein.

The "type" is a code of the original document type after conversion (each type corresponding to a two digit number combination). With the information, the corresponding document type prior to the conversion to the current JPG document may be learned.

The "page number" is the number of the page that the original document is on, and the information makes the converted document correspond to the document position in the original document.

In such a way, each JPG document comprises relevant information, such as the document name and page number. When the original document is converted, the network server sends the converted JPG documents one by one, in the sequence of conversion, to the wireless communication apparatus.

To facilitate the management of received converted documents, upon receiving the first document, the wireless communication apparatus creates an independent folder at a specific position of the document system according to the information contained in the document, such as name, type and the like, and uses the code of document name as the folder name, subsequently, saves all received JPG documents converted from said original document into said folder. In such a way, the JPG documents converted from different documents are saved into independent folders on the mobile terminal, which therefore facilitates the independent management thereof by a user. Since all JPG document names contain corresponding page numbers in the original document prior to the conversion, it is very easy to learn the content in the original document that the converted JPG documents correspond to. When it is desired to view the documents, therefore, a user can view according to the sequential process of the original document. When the user views with a wireless communication apparatus, the document processing module plays the JPG documents according to the sequence of the name and page number fields of the JPG documents, which follows the sequence of the original document and makes the viewing sequence consistent. The user may certainly choose to view the information of certain pages according to the page numbers of the JPG documents.

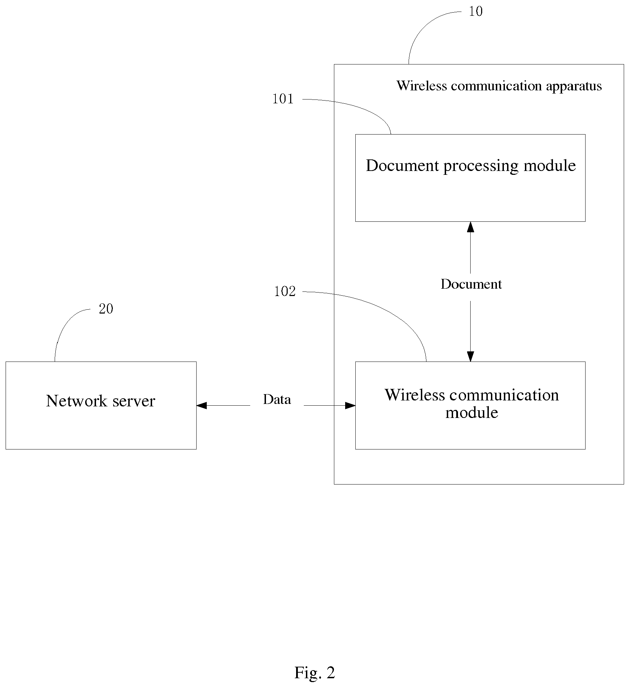

A system for document processing in a wireless communication apparatus according to the present invention is shown in Fig.2, said system comprising a wireless communication apparatus 10 and a network server 20; the wireless communication apparatus 10 and the network server 20 form a communication link via a wireless network;
Said wireless communication apparatus 10 comprises a document processing module 101 and a wireless communication module 102; said document processing module 101 is configured to process documents on the wireless communication apparatus, including determination of document types, opening or closing of a document;
Said wireless communication module 102 is configured to, over a wireless link, upload a document in the wireless communication apparatus to said network server or to receive a corresponding document from said network server and transmit the same to the document processing module for processing;
Said network server 20 is configured to receive a document uploaded by the wireless communication apparatus and carry out document conversion according to the document type, and then download the converted document to the wireless communication apparatus.

The determination of the type of a document during document processing by the document processing module 101 comprises performing identification processing on the document, if it is a document that can be identified by the wireless communication apparatus, then setting said document as an identifiable document, and transferring the corresponding file type to the system and displaying with a document icon of the corresponding type; if it is a document that cannot be identified by the wireless communication apparatus, then setting said document as an unidentifiable document type.

Said network server receiving a document uploaded by the wireless communication apparatus and carrying out document conversion according to the document type is to correspondingly covert the document to a document of an image format sequentially and save the same sequentially.

Said document processing module is further configured to, upon receiving the converted document transmitted by said network server, establish a corresponding independent folder for each document, and save the received document of an image format as converted by the network server sequentially into said corresponding independent folder.

The specific working principle is the same as that of the above method, which will not be repeated herein.

## Claims

1. A method for document processing in a wireless communication apparatus, wherein said method comprises the following steps:
A. Upon receiving a document of an unidentifiable type, a wireless communication apparatus sends the document to a network server via a wireless communication module;
B. Upon receiving the document sent by the wireless communication apparatus, the network server carries out a document type conversion processing by performing a type identification on said document, reading the document type, and activating a corresponding application on the network server to open said document for document conversion, wherein opening said document is to correspondingly convert the document to a document of an image format sequentially page by page and save the same sequentially page by page; and then sends the converted document to the wireless communication apparatus via a wireless network;
C. Upon receiving the document converted by the network server, establishing a corresponding independent folder for each document, and saving the received document of an image format as converted by the network server sequentially into said corresponding independent folder, then the wireless communication apparatus opens the document by calling a corresponding application with a document processing module.

2. The method for document processing in a wireless communication apparatus according to claim 1, wherein said step B further comprises the following step:
Pre-assigning an identification number to the wireless communication apparatus for differentiating different wireless communication apparatuses, said network server identifying said wireless communication apparatus with said identification number and establishing a network link.

3. The method for document processing in a wireless communication apparatus according to any of the preceding claims, wherein
said Step B further comprises: the network server end performs typesetting on the converted document according to the information of the original document;
said Step C further comprises: the wireless communication apparatus saves the received converted document according to certain rules and manages the same according to certain rules.

4. The method for document processing in a wireless communication apparatus according to claims 3 and 5, wherein, when the conversion is completed, the network server names the image of each page such that the name of the image file of each page comprises: name + type + page number.

5. The method for document processing in a wireless communication apparatus any of the preceding claims, further comprising:
A0. A user opens a document through a wireless communication apparatus for identification processing by a document processing module to determine the type of said document, if it is a document that can be identified by the wireless communication apparatus, then setting said document as an identifiable document, and transferring the corresponding file type to the system and displaying with a document icon of the corresponding type; if it is a document that cannot be identified by the wireless communication apparatus, then setting said document as an unidentifiable document type.

6. A system for document processing in a wireless communication apparatus, wherein the system comprises a wireless communication apparatus and a network server; the wireless communication apparatus and the network server form a communication link via a wireless network;
said wireless communication apparatus comprises a document processing module and a wireless communication module; said document processing module is configured to process documents on the wireless communication apparatus, including determination of document types, opening or closing of a document;
said wireless communication module is configured to, over a wireless link, and upon receiving a document of an unidentifiable type, send the document to a network server; said network server is configured to receive the document sent by the wireless communication apparatus and carry out document type conversion by performing a type identification on said document, reading the document type and activating a corresponding application on the network server to open said document for document conversion, wherein opening said document is to correspondingly covert the document to a document of an image format sequentially page by page and save the same sequentially page by page; and
said network server is further configured to send the converted document to the wireless communication apparatus via the wireless network; wherein said document processing module is further configured to, upon receiving the converted document transmitted by said network server, establish a corresponding independent folder for each document, and save the received document of an image format as converted by the network server sequentially into said corresponding independent folder; and
open the document by calling a corresponding application.

7. The system for document processing in a wireless communication apparatus according to claim 6, wherein said document processing module determining the type of a document during document processing comprises performing identification processing on the document, if it is a document that can be identified by the wireless communication apparatus, then setting said document as an identifiable document, and transferring the corresponding file type to the system and displaying with a document icon of the corresponding type; if it is a document that cannot be identified by the wireless communication apparatus, then setting said document as an unidentifiable document type.

8. The system for document processing in a wireless communication apparatus according to any of claims 6 to 7, wherein
said network server is further configured to perform typesetting on the converted document according to the information of the original document;
said document processing module is further configured to save the received converted document according to certain rules and manage the same according to certain rules.

## Patentansprüche

1. Verfahren für die Dokumentverarbeitung in einer drahtlosen Kommunikationsvorrichtung, wobei das Verfahren die folgenden Schritte umfasst:
A. beim Empfangen eines Dokuments eines nicht identifizierbaren Typs sendet eine drahtlose Kommunikationsvorrichtung das Dokument über ein drahtloses Kommunikationsmodul zu einem Netzserver;
B. beim Empfangen des Dokuments, das durch die drahtlose Kommunikationsvorrichtung gesendet wird, führt der Netzserver eine Dokumenttypumwandlungsverarbeitung durch Durchführen einer Typidentifikation an dem Dokument, Lesen des Dokumenttyps und Aktivieren einer entsprechenden Anwendung am Netzserver, um das Dokument für die Dokumentumwandlung zu öffnen, durch, wobei das Öffnen des Dokuments entsprechend das Dokument in ein Dokument eines Bildformats sequentiell Seite für Seite umwandeln und dasselbe sequentiell Seite für Seite speichern soll; und sendet dann das umgewandelte Dokument zur drahtlosen Kommunikationsvorrichtung über ein drahtloses Netz;
C. nach dem Empfangen des durch den Netzserver umgewandelten Dokuments, Erstellen eines entsprechenden unabhängigen Ordners für jedes Dokument und sequentielles Speichern des empfangenen Dokuments eines Bildformats, wie durch den Netzserver umgewandelt, im entsprechenden unabhängigen Ordner, öffnet dann die drahtlose Kommunikationsvorrichtung das Dokument durch Aufrufen einer entsprechenden Anwendung mit einem Dokumentverarbeitungsmodul.

2. Verfahren für die Dokumentverarbeitung in einer drahtlosen Kommunikationsvorrichtung nach Anspruch 1, wobei der Schritt B ferner den folgenden Schritt umfasst:
im Voraus Zuweisen einer Identifikationsnummer zur drahtlosen Kommunikationsvorrichtung zum Unterscheiden von verschiedenen drahtlosen Kommunikationsvorrichtungen, wobei der Netzserver die drahtlose Kommunikationsvorrichtung mit der Identifikationsnummer identifiziert und eine Netzverbindung herstellt.

3. Verfahren für die Dokumentverarbeitung in einer drahtlosen Kommunikationsvorrichtung nach einem der vorangehenden Ansprüche, wobei
der Schritt B ferner Folgendes umfasst: das Netzserverende führt eine Schriftsetzung am umgewandelten Dokument gemäß den Informationen des Originaldokuments durch;
der Schritt C ferner Folgendes umfasst: die drahtlose Kommunikationsvorrichtung speichert das empfangene umgewandelte Dokument gemäß bestimmten Regeln und managt dasselbe gemäß bestimmten Regeln.

4. Verfahren für die Dokumentverarbeitung in einer drahtlosen Kommunikationsvorrichtung nach den Ansprüchen 3 und 5, wobei, wenn die Umwandlung vollendet ist, der Netzserver das Bild jeder Seite benennt, so dass der Name der Bilddatei jeder Seite Folgendes umfasst: Name + Typ + Seitennummer.

5. Verfahren für die Dokumentverarbeitung in einer drahtlosen Kommunikationsvorrichtung nach einem der vorangehenden Ansprüche, das ferner Folgendes umfasst:
A0. Ein Benutzer öffnet ein Dokument durch eine drahtlose Kommunikationsvorrichtung zur Identifikationsverarbeitung durch ein Dokumentverarbeitungsmodul, um den Typ des Dokuments zu bestimmen, wenn es sich um ein Dokument handelt, das durch die drahtlose Kommunikationsvorrichtung identifiziert werden kann, dann Festlegen des Dokuments als identifizierbares Dokument und Übertragen des entsprechenden Dateityps zum System und Anzeigen mit einem Dokumentbildsymbol des entsprechenden Typs; wenn es sich um ein Dokument handelt, das durch die drahtlose Kommunikationsvorrichtung nicht identifiziert werden kann, dann Festlegen des Dokuments als nicht identifizierbaren Dokumenttyp.

6. System für die Dokumentverarbeitung in einer drahtlosen Kommunikationsvorrichtung, wobei das System eine drahtlose Kommunikationsvorrichtung und einen Netzserver umfasst; wobei die drahtlose Kommunikationsvorrichtung und der Netzserver eine Kommunikationsverbindung über ein drahtloses Netz bilden;
wobei die drahtlose Kommunikationsvorrichtung ein Dokumentverarbeitungsmodul und ein drahtloses Kommunikationsmodul umfasst; wobei das Dokumentverarbeitungsmodul dazu konfiguriert ist, Dokumente an der drahtlosen Kommunikationsvorrichtung zu verarbeiten, einschließlich der Bestimmung von Dokumenttypen, des Öffnens oder Schließens eines Dokuments;
wobei das drahtlose Kommunikationsmodul dazu konfiguriert ist, über eine drahtlose Verbindung und beim Empfangen eines Dokuments eines nicht identifizierbaren Typs das Dokument zu einem Netzserver zu senden;
wobei der Netzserver dazu konfiguriert ist, das durch die drahtlose Kommunikationsvorrichtung gesendete Dokument zu empfangen und eine Dokumenttypumwandlung durch Durchführen einer Typidentifikation an dem Dokument, Lesen des Dokumenttyps und Aktivieren einer entsprechenden Anwendung am Netzserver, um das Dokument für die Dokumentumwandlung zu öffnen, auszuführen, wobei das Öffnen des Dokuments das Dokument entsprechend in ein Dokument eines Bildformats sequentiell Seite für Seite umwandeln und dasselbe sequentiell Seite für Seite speichern soll; und
wobei der Netzserver ferner dazu konfiguriert ist, das umgewandelte Dokument zur drahtlosen Kommunikationsvorrichtung über das drahtlose Netz zu senden;
wobei das Dokumentverarbeitungsmodul ferner dazu konfiguriert ist, beim Empfangen des durch den Netzserver übertragenen umgewandelten Dokuments einen entsprechenden unabhängigen Ordner für jedes Dokument zu erstellen und das empfangene Dokument eines Bildformats, wie durch den Netzserver sequentiell umgewandelt, im entsprechenden unabhängigen Ordner zu speichern; und das Dokument durch Aufrufen einer entsprechenden Anwendung zu öffnen.

7. System für die Dokumentverarbeitung in einer drahtlosen Kommunikationsvorrichtung nach Anspruch 6, wobei das Dokumentverarbeitungsmodul, das den Typ eines Dokuments während der Dokumentverarbeitung bestimmt, das Durchführen einer Identifikationsverarbeitung an dem Dokument, wenn es sich um ein Dokument handelt, das durch die drahtlose Kommunikationsvorrichtung identifiziert werden kann, dann das Festlegen des Dokuments als identifizierbares Dokument und Übertragen des entsprechenden Dateityps zum System und Anzeigen mit einem Dokumentbildsymbol des entsprechenden Typs; wenn es sich um ein Dokument handelt, das durch die drahtlose Kommunikationsvorrichtung nicht identifiziert werden kann, dann das Festlegen des Dokuments als nicht identifizierbaren Dokumenttyp umfasst.

8. System für die Dokumentverarbeitung in einer drahtlosen Kommunikationsvorrichtung nach einem der Ansprüche 6 bis 7, wobei
der Netzserver ferner dazu konfiguriert ist, eine Schriftsetzung an dem umgewandelten Dokument gemäß den Informationen des Originaldokuments durchzuführen;
das Dokumentverarbeitungsmodul ferner dazu konfiguriert ist, das empfangene umgewandelte Dokument gemäß bestimmten Regeln zu speichern und dasselbe gemäß bestimmten Regeln zu managen.

## Revendications

1. Procédé de traitement de document dans un appareil de communication sans fil, ledit procédé comprenant les étapes suivantes :
A. Lors de la réception d'un document d'un type non identifiable, l'envoi, par un appareil de communication sans fil, du document à un serveur de réseau par le biais d'un module de communication sans fil ;
B. Lors de la réception du document envoyé par l'appareil de communication sans fil, la mise en oeuvre, par le serveur de réseau, d'un traitement de conversion de type de document par réalisation d'une identification de type sur ledit document, lecture du type de document et activation d'une application correspondante sur le serveur de réseau aux fins d'ouvrir ledit document en vue d'une conversion de document, l'ouverture dudit document visant à convertir de façon correspondante le document en un document à un format image séquentiellement page par page et à le sauvegarder séquentiellement page par page ; puis l'envoi, par le serveur de réseau, du document converti à l'appareil de communication sans fil par le biais d'un réseau sans fil ;
C. Lors de la réception du document converti par le serveur de réseau, l'établissement d'un dossier indépendant correspondant pour chaque document, et la sauvegarde du document reçu à un format image tel que converti par le serveur de réseau séquentiellement dans ledit dossier indépendant correspondant, puis l'ouverture, par l'appareil de communication sans fil, du document par appel d'une application correspondante dotée d'un module de traitement de document.

2. Procédé de traitement de document dans un appareil de communication sans fil selon la revendication 1, dans lequel ladite étape B comprend en outre l'étape suivante :
l'assignation préalable, à l'appareil de communication sans fil, d'un numéro d'identification permettant la différenciation d'appareils de communication sans fil différents, ledit serveur de réseau identifiant ledit appareil de communication sans fil au moyen dudit numéro d'identification et établissant une liaison de réseau.

3. Procédé de traitement de document dans un appareil de communication sans fil selon l'une quelconque des revendications précédentes, dans lequel
ladite Étape B comprend en outre : la réalisation, par l'extrémité serveur de réseau, d'une composition sur le document converti selon les informations du document d'origine ;
ladite Étape C comprend en outre : la sauvegarde, par l'appareil de communication sans fil, du document converti reçu selon certaines règles et sa gestion, par l'appareil de communication sans fil, selon certaines règles.

4. Procédé de traitement de document dans un appareil de communication sans fil selon les revendications 3 et 5, dans lequel, à l'issue de la conversion, le serveur de réseau nomme l'image de chaque page de telle sorte que le nom du fichier image pour chaque page comprenne : nom + type + numéro de page.

5. Procédé de traitement de document dans un appareil de communication sans fil selon l'une quelconque des revendications précédentes, comprenant en outre :
A0. L'ouverture, par un utilisateur, d'un document au moyen d'un appareil de communication sans fil, en vue d'un traitement d'identification par un module de traitement de document aux fins de déterminer le type dudit document ; s'il s'agit d'un document pouvant être identifié par l'appareil de communication sans fil, la définition subséquente dudit document comme un document identifiable et le transfert du type de fichier correspondant au système et l'affichage avec une icône de document du type correspondant ; s'il s'agit d'un document ne pouvant pas être identifié par l'appareil de communication sans fil, la définition subséquente dudit document comme un type de document non identifiable.

6. Système de traitement de document dans un appareil de communication sans fil, lequel système comprend un appareil de communication sans fil et un serveur de réseau ; l'appareil de communication sans fil et le serveur de réseau formant une liaison de communication par le biais d'un réseau sans fil ;
ledit appareil de communication sans fil comprenant un module de traitement de document et un module de communication sans fil ; ledit module de traitement de document étant configuré pour traiter des documents sur l'appareil de communication sans fil, notamment la détermination de types de document, l'ouverture ou la fermeture d'un document ;
ledit module de communication sans fil étant configuré pour, sur une liaison sans fil et lors de la réception d'un document d'un type non identifiable, envoyer le document à un serveur de réseau ;
ledit serveur de réseau étant configuré pour recevoir le document envoyé par l'appareil de communication sans fil et mettre en oeuvre une conversion de type de document en réalisant une identification de type sur ledit document, en lisant le type de document et en activant une application correspondante sur le serveur de réseau aux fins d'ouvrir ledit document en vue d'une conversion de document, l'ouverture dudit document visant à convertir de façon correspondante le document en un document à un format image séquentiellement page par page et à le sauvegarder séquentiellement page par page ; et
ledit serveur de réseau étant configuré en outre pour envoyer le document converti à l'appareil de communication sans fil par le biais du réseau sans fil ;
ledit module de traitement de document étant configuré en outre pour, lors de la réception du document converti transmis par ledit serveur de réseau, établir un dossier indépendant correspondant pour chaque document, et sauvegarder le document reçu à un format image tel que converti par le serveur de réseau séquentiellement dans ledit dossier indépendant correspondant ;
et ouvrir le document en appelant une application correspondante.

7. Système de traitement de document dans un appareil de communication sans fil selon la revendication 6, dans lequel la détermination, par ledit module de traitement de document, du type d'un document au cours d'un traitement de document comprend la réalisation d'un traitement d'identification sur le document ; s'il s'agit d'un document pouvant être identifié par l'appareil de communication sans fil, la définition subséquente dudit document comme un document identifiable et le transfert du type de fichier correspondant au système et l'affichage avec une icône de document du type correspondant ; s'il s'agit d'un document ne pouvant pas être identifié par l'appareil de communication sans fil, la définition subséquente dudit document comme un type de document non identifiable.

8. Système de traitement de document dans un appareil de communication sans fil selon l'une quelconque des revendications 6 à 7, dans lequel
ledit serveur de réseau est configuré en outre pour réaliser une composition sur le document converti selon les informations du document d'origine ;
ledit module de traitement de document est configuré en outre pour sauvegarder le document converti reçu selon certaines règles et le gérer selon certaines règles.
